# EUROPEAN PATENT APPLICATION

(11) **EP 4 764 559 A1**
(43) Date of publication of application: **24.06.2026**
(21) Application number: 24903902.5
(22) Date of filing: 11.09.2024
(51) Int. Cl.: G01R 31/396, G01R 31/367, G06F 16/27, B60L 58/10, G06F 123/02

(54) **DATA MANAGEMENT DEVICE AND OPERATION METHOD THEREOF**

(30) Priority: 13.12.2023 KR 20230181027
(71) Applicant: LG Energy Solution, Ltd., Seoul 07335 (KR)
(72) Inventor: KIM, Hyo Jung, Daejeon 34122 (KR); JEONG, Su Hyun, Daejeon 34122 (KR)
(74) Representative: Goddar, Heinz J.
(86) International application number: PCT/KR2024/013773
(87) International publication number: WO 2025/127331

(57) **Abstract**

A data management device according to an embodiment disclosed herein may include a data acquisition unit configured to acquire battery data including shade battery data from a vehicle, a storage including a plurality of partitions and storing the battery data, and a controller is configured to store the battery data in each of the plurality of partitions based on a generation time that is the time when the battery data is generated from the vehicle, generate battery data corresponding to the generation time of the shade battery data among the pieces of battery data stored in the storage and temporary battery data including the shade battery data, and divide the temporary battery data and re-store the divided temporary battery data in a partition corresponding to the generation time among the plurality of partitions.

## Description

### Technical Field

### CROSS-REFERENCE TO RELATED APPLICATION

This application claims priority to and the benefit of Korean Patent Application No. 10-2023-0181027 filed in the Korean Intellectual Property Office on December 13, 2023, the entire contents of which are incorporated herein by reference.

### TECHNICAL FIELD

Various embodiments disclosed herein relate to a data management device and a method of operating the same.

### Background Art

Recently, research and development on secondary batteries has been actively conducted. A secondary battery is a battery capable of charging and discharging and includes all recent lithium ion batteries in addition to conventional Ni/Cd batteries and Ni/MH batteries. The lithium-ion batteries have an advantage of having a much higher energy density than the conventional Ni/Cd batteries, the Ni/MH batteries, etc. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

A separate data management device may be used for analyzing battery data. The data management device may collect battery data on a state of a battery from a battery management device connected to the battery or a battery pack including the battery. In addition, the data management device may collect battery data from a server.

As the amount of battery data collected recently increases, the importance of managing the battery data increases, and the cost of managing the battery data may increase. Therefore, there is a need to manage the collected data to reduce the management cost of the battery data and efficiently manage the battery data.

### Disclosure

### Technical Problem

Various embodiments of the present invention are directed to providing a data management device for managing data stored in a database, and a method of operating the same.

Various embodiments of the present invention are also directed to providing a data management device and a method of operating the same, which are based on an algorithm for preventing distribution distortion of data stored in a database.

The technical objects of the embodiments disclosed herein are not limited to the above-described technical objects, and other objects that are not described will be able to be clearly understood by those skilled in the art from the following descriptions.

### Technical Solution

A data management device according to an embodiment disclosed herein may include a data acquisition unit configured to acquire battery data including shade battery data from a vehicle, a storage including a plurality of partitions and storing the battery data, and a controller is configured to store the battery data in each of the plurality of partitions based on a generation time that is the time when the battery data is generated from the vehicle, generate battery data corresponding to the generation time of the shade battery data among the pieces of battery data stored in the storage and temporary battery data including the shade battery data, and divide the temporary battery data and re-store the divided temporary battery data in a partition corresponding to the generation time among the plurality of partitions.

According to an embodiment, the shade battery data may be battery data that is generated at the same generation time as the battery data stored in the storage and acquired by the data acquisition unit after the stored battery data is stored in the storage.

According to an embodiment, the controller may divide the battery data into the same size and store the divided battery data in each of the plurality of partitions.

According to an embodiment, the controller may divide the battery data based on the number of computing nodes of the data management device.

According to an embodiment, the controller may be configured to store the temporary battery data in a buffer, and delete the battery data corresponding to the generation time of the shade battery data stored in the storage before storing the temporary battery data in the storage.

According to an embodiment, the controller may divide the temporary battery data into the same size and re-store the divided temporary battery data in the partition corresponding to the generation time.

According to an embodiment, the controller may divide the temporary battery data based on the number of computing nodes of the data management device.

According to an embodiment, the controller may divide the temporary battery data in time series order.

A data management method according to an embodiment disclosed herein may include acquiring battery data including shade battery data from a vehicle, storing the battery data in each of a plurality of partitions in a storage including the plurality of partitions based on a generation time that is the time when the battery data is generated from the vehicle, generating battery data corresponding to the generation time of the shade battery data among the pieces of battery data stored in the storage and temporary battery data including the shade battery data, and dividing the temporary battery data and re-storing the divided temporary battery data in a partition corresponding to the generation time among the plurality of partitions.

According to an embodiment, the shade battery data may be battery data that is generated at the same generation time as the battery data stored in the storage and acquired after the stored battery data is stored in the storage.

According to an embodiment, the storing of the battery data in each of the plurality of partitions may include dividing the battery data into the same size and storing the divided battery data in each of the plurality of partitions.

According to an embodiment, the data processing method may include dividing the battery data based on the number of computing nodes of the data management method.

According to an embodiment, the data management method may further include storing the temporary battery data in a buffer, and deleting the battery data corresponding to the generation time of the shade battery data stored in the storage before storing the temporary battery data in the storage.

According to an embodiment, the re-storing of the temporary battery data may include dividing the temporary battery data into the same size and re-storing the divided temporary battery data in the partition corresponding to the generation time.

According to an embodiment, the data management method may include dividing the temporary battery data based on the number of computing nodes of the data management method.

According to an embodiment, the re-storing of the temporary battery data may include dividing the temporary battery data in time series order.

### Advantageous Effects

The data management device and the method of operating the same according to the embodiments disclosed herein can manage the data stored in the database.

The data management device and the method of operating the same according to the embodiments disclosed herein can be based on the algorithm for preventing the distribution distortion of the data stored in the database.

In addition, various effects that may be directly or indirectly identified through the present document can be provided.

### Description of Drawings

FIG. 1 is a view showing a data management system according to one embodiment disclosed herein.
FIG. 2 is a block diagram showing a data management device according to one embodiment disclosed herein.
FIG. 3 is a view showing data stored in the data management device according to one embodiment disclosed herein.
FIG. 4 is a view showing data stored in the data management device according to one embodiment disclosed herein.
FIG. 5 is a view showing data stored in the data management device according to one embodiment disclosed herein.
FIG. 6 is a view showing a buffer of the data management device according to one embodiment disclosed herein.
FIG. 7 is a flowchart for describing an operation of the battery management device according to one embodiment disclosed herein.
FIG. 8 is a block diagram showing a hardware configuration of a computing system for performing a method of operating a data management device according to one embodiment disclosed herein.

### Mode for Invention

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

It should be understood that various embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., by wire), wirelessly, or through a third component.

According to one embodiment, a method according to various embodiments disclosed herein may be provided by being included in a computer program product. The computer program product may be traded between sellers and buyers as commodities. The computer program product may be distributed in the form of a device-readable storage medium (e.g., compact disc read only memory (CD-ROM)) or distributed online (e.g., downloading or uploading) via an application store (e.g., Play Store^{™}) or directly between two user devices (e.g., smartphones). The computer program product may be distributed in the form of a device-readable storage medium (e.g., a compact disc read only memory (CD-ROM)) or distributed (e.g., downloaded or uploaded) through an application store or directly online between two user devices. In the case of the online distribution, at least some of the computer program products may be at least temporarily stored or temporarily generated in a device-readable storage medium such as a memory of a server of a manufacturer, a server of an application store, or a relay server.

According to various embodiments, each component (e.g., a module or a program) of the above-described components may include a single object or a plurality of objects, and some of the plurality of objects may be separately disposed in another component. According to various embodiments, one or more of the above-described corresponding components or their operations may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

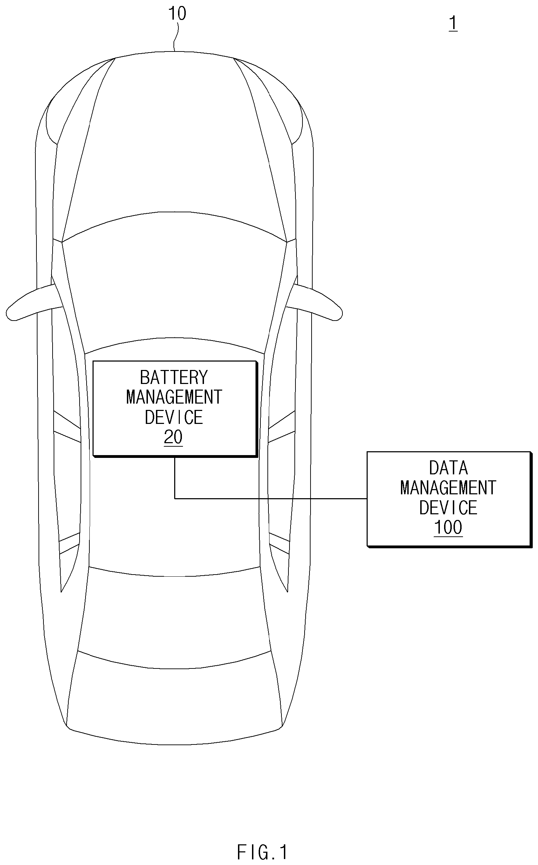

FIG. 1 is a view showing a data management system according to one embodiment disclosed herein.

Referring to FIG. 1, a data management system 1 according to one embodiment disclosed herein may include a battery management device 20 for managing a battery (not shown) included in a vehicle 10 and a data management device 100. Although FIG. 1 shows that the data management system 1 includes the vehicle 10, the present document is not limited thereto, and the data management system 1 may include any device including a battery, such as an energy storage system (ESS), in addition to the vehicle 10.

According to an embodiment, the vehicle 10 may include an electrical, electronic, or mechanical vehicle that is operated by receiving power from the battery (not shown). For example, the vehicle 10 may include an electric vehicle (EV) and/or a two-wheeled electric vehicle.

According to an embodiment, the vehicle 10 may include one or more batteries (not shown). Here, the battery may supply power to a target device (e.g., a vehicle). According to an embodiment, the battery may include one or more battery cells. Here, the battery cell may be a basic unit of a battery cell that may be used by charging and discharging electric energy. For example, the battery cell may be a lithium ion (Li-ion) battery, a lithium ion (Li-ion) polymer battery, a nickel cadmium (Ni-Cd) battery, a nickel-metal hydride (Ni-MH) battery, etc., but is not limited thereto.

According to an embodiment, the battery management device 20 may manage, diagnose, and test the battery. According to an embodiment, the battery management device 20 may be included in one of a battery management system (BMS) inside a battery pack, a battery management server, a computer, and a cloud server. According to another embodiment, the battery management device 20 may be included in a device for a charge and discharge test, such as a charge and discharge cycler.

According to an embodiment, the data management device 100 may acquire and manage data through the battery management device 20. For example, the data management device 100 may include a portable communication device (e.g., a smartphone), a computer device, a portable multimedia device, a wearable device, or a server (e.g., a cloud server), and various embodiments are not limited thereto. Contents related to the data management device 100 according to the embodiment may be described in detail through the following drawings.

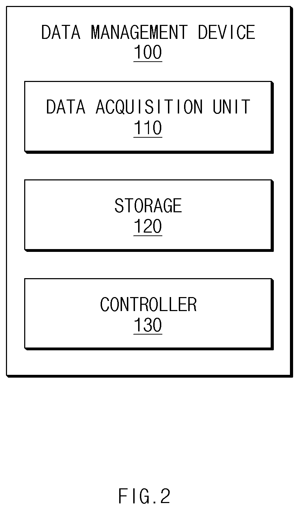

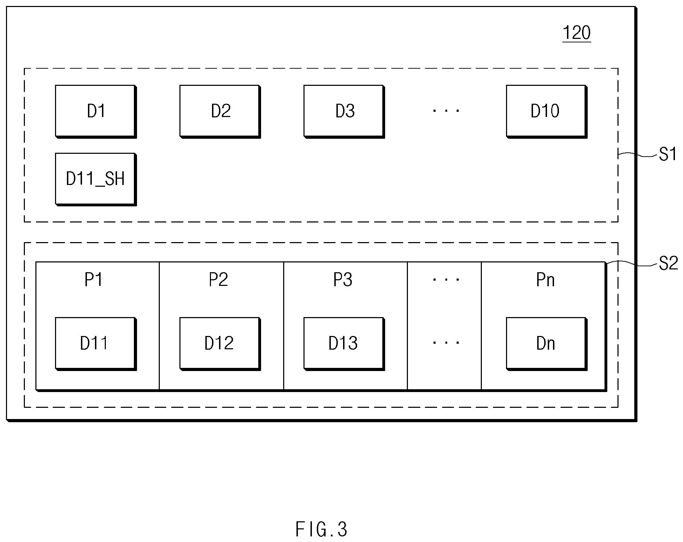

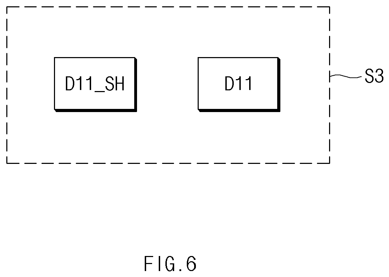

FIG. 2 is a block diagram showing a data management device according to one embodiment disclosed herein. FIGS. 3 to 5 are views showing data stored in the data management device according to one embodiment disclosed herein. FIG. 6 is a view showing a buffer of the data management device according to one embodiment disclosed herein.

First, referring to FIG. 2, the data management device 100 may include a data acquisition unit 110, a storage unit 120, and a controller 130. However, this is only an example, and various embodiments are not limited thereto. For example, at least one of the above-described components of the data management device 100 may be omitted, or one or more other components may be added to the configuration of the data management device 100. In addition, at least one of the above-described components may be integrated with another component.

Referring to FIGS. 2 and 3, the data acquisition unit 110 may acquire battery data D1, D2, D3, ..., D11_SH, ..., and Dn included in the vehicle 10. Here, the battery data D1, D2, D3, ..., D11_SH, ..., and Dn may be data on states of a battery. For example, the battery data D1, D2, D3, ..., D11_SH, ..., and Dn may include measured values such as a voltage, current, and temperature of a battery. In addition, the battery data D1, D2, D3, ..., D11_SH, ..., and Dn may include information about the state of the battery calculated based on the measured value. For example, the information about the state of the battery may include a state of charge (SOC), a state of health (SOH), resistance, a current cycle, a remaining predicted cycle, a C-rate, etc.

According to an embodiment, the data acquisition unit 110 may acquire the battery data D1, D2, D3, ..., D11_SH, ..., and Dn in a traveling state and inactive state (or parking state) of the vehicle 10. In another aspect, the data acquisition unit 110 may acquire the battery data D1, D2, D3, ..., D11_SH, ..., and Dn in a charging section, idle section after charging, discharging section, and idle section after discharging of the battery included in the vehicle 10.

According to an embodiment, the data acquisition unit 110 may acquire the battery data D1, D2, D3, ..., D11_SH, ..., and Dn in real time. Here, the real time may mean acquiring data at an actual time when battery data is generated. According to another embodiment, the data acquisition unit 110 may acquire the battery data D1, D2, D3, ..., D11_SH, ..., and Dn at predetermined time intervals. For example, the data acquisition unit 110 may acquire battery data at predetermined unit time intervals (e.g., 1 second, 1 minute, 10 minutes, 1 hour, or 1 day).

According to an embodiment, the data acquisition unit 110 may acquire the battery data D1, D2, D3, ..., D11_SH, ..., and Dn from the battery management device 20, a user terminal, a server, a cloud server, or a database. However, the present document is not limited thereto, and the data acquisition unit 110 may acquire the battery data D1, D2, D3, ..., D11_SH, ..., and Dn from another system or platform connected via a wired and/or wireless network.

According to an embodiment, the battery data D1, D2, D3, ..., D11_SH, ..., and Dn may include shadow battery data D11_SH. Here, the shadow battery data D11_SH may be data that was not transmitted to the data management device 100 in a timely manner due to reasons such as communication failure among pieces of data collected in the battery management device 20. Therefore, the shadow battery data D11_SH may mean a case in which battery data that should have been acquired by the data acquisition unit 110 at a specific point in the past was acquired later by the data acquisition unit 110.

According to an embodiment, the storage 120 may store data used by at least one component (e.g., the controller 130) of the data management device 100. According to an embodiment, the storage 120 may be a storage space in which big data is stored. For example, the storage 120 may be a data warehouse.

According to an embodiment, the controller 130 may store the battery data D1, D2, D3, ..., D11_SH, ..., and Dn in the storage 120. In addition, the controller 130 may process and manage the battery data D1, D2, D3, ..., D11_SH, ..., and Dn.

According to an embodiment, the storage 120 may store the battery data D1, D2, D3, ..., D11_SH, ..., and Dn acquired from the data acquisition unit 110. Here, the battery data D1, D2, D3, ..., D11_SH, ..., and Dn may include a voltage, current, and/or temperature change profile according to the SOC of the battery. The types of battery data D1, D2, D3, ..., D11_SH, ..., and Dn stored in the storage may be added or changed.

According to an embodiment, the storage 120 may include a short-term storage S1 and a long-term storage S2. Here, the short-term storage S1 may be a space for storing data in the short term, and the long-term storage S2 may be a space for storing data in the long term. According to an embodiment, the controller 130 may separately store the battery data in the short-term storage S1 and the long-term storage S2 based on a storage period of the battery data. For example, the battery data D1, D2, D3, ..., D11_SH, ..., and Dn acquired from the data acquisition unit 110 may be stored in the short-term storage S1 for a predetermined period from the time point of being stored in the data management device 100 and then stored by being moved to the long-term storage S2.

According to an embodiment, the predetermined period may be determined by the controller 130. For example, the controller 130 may determine that the predetermined period is 10 days. In this case, the controller 130 may store the battery data (e.g., D1, D2, D3, ..., and D10) stored in the data management device 100 for a period of less than 10 days in the short-term storage S1 and the battery data (e.g., D11, D12, D13, ..., and Dn) stored in the long-term storage S2 for a period of more than 10 days.

According to an embodiment, the storage 120 may include a plurality of partitions P1, P2, P3, ..., and Pn. Here, the partitions P1, P2, P3, ..., and Pn may be storage units for dividing and managing a database. A portion of the storage 120 including the plurality of partitions P1, P2, P3, ..., and Pn may be the long-term storage S2.

According to an embodiment, the controller 130 may generate the partitions P1, P2, P3, ..., and Pn in the storage 120 using any partitioning technique. For example, the controller 130 may generate the partitions P1, P2, P3, ..., and Pn in the storage 120 using techniques such as range partitioning, multicolumn range partitioning, hash partitioning, list partitioning, composite partitioning, reference partitioning, interval partitioning, and system partitioning.

According to an embodiment, the controller 130 may store the battery data D1, D2, D3, ..., D11_SH, ..., and Dn in the plurality of partitions P1, P2, P3, ..., and Pn, respectively, based on the attributes of the battery data D1, D2, D3, ..., D11_SH, ..., and Dn. Here, the attributes of the data may include any attribute related to data, such as the time when data is generated, the type of vehicle from which the data is collected, and the type of data. Therefore, the controller 130 may group and store the battery data D1, D2, D3, ..., D11_SH, ..., and Dn, thereby saving a data storage space and increasing the ease of data access.

According to an embodiment, the controller 130 may store the battery data D1, D2, D3, ..., D11_SH, ..., and Dn in the plurality of partitions P1, P2, P3, ..., and Pn, respectively, based on generation times of the battery data D1, D2, D3, ..., D11_SH, ..., and Dn. Here, the generation times of the battery data D1, D2, D3, ..., D11_SH, ..., and Dn may be the time when the battery data D1, D2, D3, ..., D11_SH, ..., and Dn are generated in the vehicle 10. In this case, each of the plurality of partitions P1, P2, P3, ..., and Pn may correspond to a specific time. For example, the controller 130 may store battery data generated on different dates in different partitions based on the generation time (unit: day) of the battery data.

According to an embodiment, the controller 130 may store some of the battery data excluding the shade battery data D11_SH in the plurality of partitions P1, P2, P3, ..., and Pn. In another aspect, the controller 130 may store battery data whose storage period is a predetermined period or more among the pieces of battery data excluding the shade battery data D11_SH in the long-term storage S2.

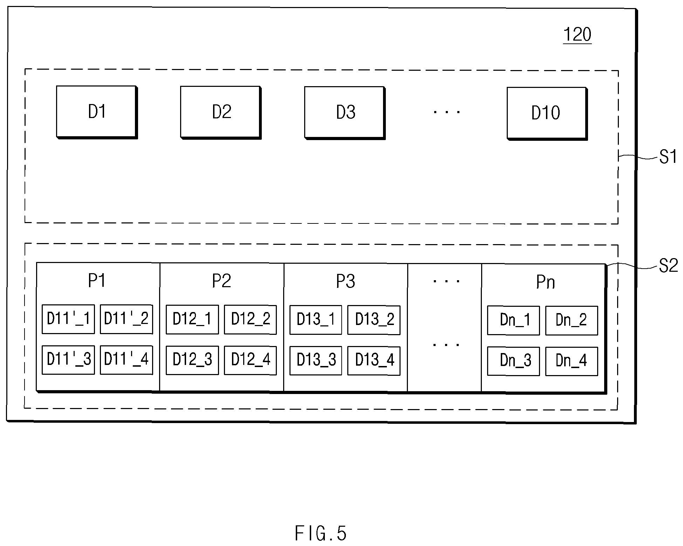

According to an embodiment, the controller 130 may manage the shade battery data D11_SH together with the battery data D11 that has been generated at the same generation time as the shade battery data and already stored in the partition P1. Here, an operation of the controller 130 may be described with reference to FIGS. 5 and 6. Therefore, the controller 130 may efficiently manage the shade battery data D11_SH and the battery data stored in each of the plurality of partitions P1, P2, P3, ..., and Pn.

Referring to FIG. 3, the controller 130 may store battery data that a predetermined period has elapsed after being acquired by the data management device 100 in each of the plurality of partitions P1, P2, P3, ..., and Pn. Here, the predetermined period may be the same as a predetermined period (e.g., 10 days) that is a reference for storing battery data in the long-term storage S2. For example, the controller 130 may store the battery data D11, D12, D13, ..., and Dn that 10 days has elapsed after being acquired in the plurality of partitions P1, P2, P3, ..., and Pn, respectively. Therefore, the controller 130 may efficiently manage battery data by dividing and storing battery data that requires long-term storage in each of the plurality of partitions P1, P2, P3, ..., and Pn.

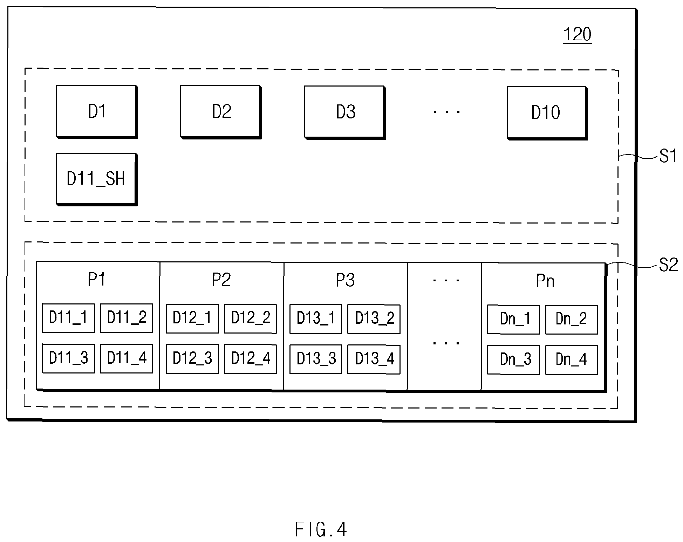

Referring to FIG. 4, the controller 130 may divide and store the battery data Dn in each of the plurality of partitions P1, P2, P3, ..., and Pn. In another aspect, each of the plurality of partitions P1, P2, P3, ..., and Pn may include divided battery data Dn_1, Dn_2, Dn_3, ..., and Dn_4. For example, the controller 130 may divide the battery data Dn into one or more battery data Dn_1, Dn_2, Dn_3, and Dn_4 and store the divided battery data Dn_1, Dn_2, Dn_3, and Dn_4 in the partition Pn.

According to an embodiment, the controller 130 may perform the distribution processing on the divided battery data Dn_1, Dn_2, Dn_3, and Dn_4 using a plurality of computing nodes. Here, the computing node may be an operation or processing unit in which the controller 130 processes data. Therefore, the controller 130 may perform the distribution processing on the divided battery data Dn_1, Dn_2, Dn_3, and Dn_4, thereby processing the battery data simultaneously and in parallel and increasing a data processing speed.

According to an embodiment, the controller 130 may divide the battery data Dn into the same size and store the divided battery data in each of the plurality of partitions P1, P2, P3, ..., and Pn. Here, the size of the data may be a size of a data file. In this case, when the controller 130 processes the battery data Dn_1, Dn_2, Dn_3, and Dn_4 divided into the same size, a load of each of the plurality of computing nodes may be the same.

According to various embodiments, when the controller 130 divides the battery data Dn into different sizes, data with a large size may be concentrated on a specific computing node. In this case, a processing speed of the specific computing node may be delayed, and data distribution distortion may occur. In contrast, when the controller 130 divides the battery data Dn into the same size as in the present invention, all computing nodes may process data with the same size. Therefore, it is possible to increase the distribution processing speed of the controller 130. In addition, it is possible to optimize the performance of the controller 130.

According to an embodiment, the controller 130 may divide the battery data Dn based on the number of computing nodes of the data management device 100. Here, the number of computing nodes may vary depending on the specifications of the data management device 100. For example, when the computing nodes of the data management device 100 are four, the controller 130 may divide the battery data Dn into four battery data Dn_1, Dn_2, Dn_3, and Dn_4. Therefore, each computing node may process one divided battery data. Therefore, the controller 130 can increase the data distribution processing speed without data distribution distortion.

According to an embodiment, the controller 130 may divide the battery data Dn in time series order. In another aspect, the controller 130 may divide the battery data Dn in a time order in which the battery data Dn is generated. Therefore, the controller 130 may manage the battery data Dn in the time order.

Referring to FIG. 5, the controller 130 may manage the shade battery data D11_SH integrally with the battery data stored in the storage 120. Here, the shade battery data D11_SH may be missing battery data when some battery data are transmitted from the vehicle 10, etc. to the data management device 100 due to reasons such as communication failure. According to an embodiment, one or more shade battery data may be present.

According to an embodiment, the shade battery data D11_SH may be battery data that is generated at the same generation time as the battery data (e.g., D11) stored in the storage 120 and acquired by the data acquisition unit 110 after the stored battery data D11 is stored in the storage 120. In another aspect, when the shade battery data D11_SH is stored in the short-term storage S1, the shade battery data D11_SH may be battery data that is generated at the same generation time as the battery data (e.g., D11) stored in the long-term storage S2 and acquired by the data acquisition unit 110 after the stored battery data D11 is stored in the long-term storage S2.

According to an embodiment, the controller 130 may manage the shade battery data D11_SH integrally with the battery data D11 that is generated at the same generation time as the shade battery data D11_SH and stored in the storage 120.

According to various embodiments, when the controller 130 stores the shade battery data D11_SH in the partition P1 including the battery data D11 stored in the storage 120, the shade battery data D11_SH may be additionally stored as a file separately from the battery data D11 already stored in the partition P1. Therefore, the shade battery data D11_SH may have a different size from the already stored battery data D11. In addition, as the number of shade battery data D11_SH increases, the size of the battery data stored in the partition P1 may increase in various ways. In this case, there is a problem that data distribution distortion may occur and a data processing speed may be delayed.

In contrast, the controller 130 according to the embodiment may integrate the battery data D11 and the shade battery data D11_SH to generate temporary battery data D11' and re-store the temporary battery data D11' that is the integrated battery data in the partition P1. Here, the battery data D11 may be battery data corresponding to the generation time of the shade battery data D11_SH among the pieces of battery data stored in the storage 120. In addition, the partition P1 in which the temporary battery data D11' is re-stored may be a partition corresponding to the generation time among the plurality of partitions. Therefore, the controller 130 can prevent the above-described data distribution distortion and increase the data processing speed.

Referring to FIG. 6, the controller 130 may generate the temporary battery data D11' using a temporary table (or a buffer) S3. Here, the temporary table or buffer S3 may be a temporary data storage.

According to an embodiment, the controller 130 may load the shade battery data D11_SH of the short-term storage S1 and the battery data D11 of the long-term storage S2 into the buffer S3 and integrate the two data D11_SH and D11 into one data group. Here, the integrated data group may be referred to as the temporary battery data D11'.

According to an embodiment, the controller 130 may load the battery data D11 of the long-term storage S2 into the buffer S3 that is a data table and subsequently load the shade battery data D11_SH into the same table. Therefore, the controller 130 may store the temporary battery data D11' in the buffer S3. According to an embodiment, the controller 130 may list the battery data D11 and the shade battery data D11_SH in time series order in the data table.

According to an embodiment, the controller 130 may re-store the temporary battery data D11' into the long-term storage S2 of the storage 120. Here, a file size of the temporary battery data D11' may be larger than a file size of the battery data D11. According to an embodiment, the controller 130 may re-store the temporary battery data D11' in the partition P1 where the battery data D11 generated at the same generation time as the shade battery data D11_SH is stored. Therefore, the controller 130 may re-store the temporary battery data D11' while maintaining the plurality of partitions P1, P2, P3, ..., and Pn.

According to an embodiment, the controller 130 may delete the battery data D11 stored in the partition P1 before re-storing the temporary battery data D11'. In another aspect, the controller 130 may delete the battery data D11 corresponding to the generation time of the shade battery data D11_SH stored in the storage 120 before re-storing the temporary battery data D11'. Therefore, the controller 130 can reduce the possibility of losing the battery data D11 before generating the temporary battery data D11'. In addition, the controller 130 may re-store the temporary battery data D11' while maintaining the plurality of partitions P1, P2, P3, ..., and Pn without having to generate a new partition.

According to an embodiment, the controller 130 may divide the temporary battery data D11' and re-store the divided temporary battery data in the partition P1. Here, the controller 130 may divide the temporary battery data D11' using the above-described battery data division method. For example, the controller 130 may divide the temporary battery data D11' into the same size. In addition, the controller 130 may divide the temporary battery data D11' based on the number of computing nodes of the data management device 100. In addition, the controller 130 may divide the temporary battery data D11' in time series order. The content related to division has been described with reference to FIG. 4 and thus may not be described repeatedly here. Therefore, the controller 130 can prevent data distribution distortion and increase the data processing speed.

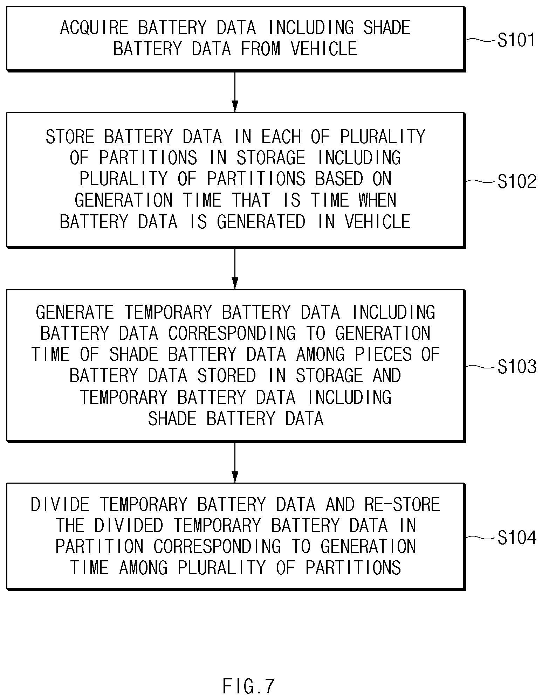

FIG. 7 is a flowchart for describing an operation of the battery management device according to one embodiment disclosed herein.

Operations shown in FIG. 7 may be performed through the data management device 100 of FIGS. 1 and 2. Each operation in the following embodiment may be performed sequentially, but is not necessarily performed sequentially. For example, the order of each operation may be changed, and at least two operations may be performed in parallel. In addition, at least one of the following operations may be omitted according to embodiments.

Referring to FIG. 7, the data management device 100 may include acquiring battery data including shade battery data from a vehicle (S101), storing the battery data in each of a plurality of partitions based on a generation time, which is the time when the battery data is generated in the vehicle, in a storage including the plurality of partitions (S102), generating battery data corresponding to the generation time of the shade battery data among the pieces of battery data stored in the storage and temporary battery data including the shade battery data (S103), and dividing the temporary battery data and re-storing the divided temporary battery data in the partition corresponding to the generation time among the plurality of partitions (S104).

In operation S101, the data management device 100 may acquire the battery data D1, D2, ..., and Dn including the shade battery data D11_SH from the vehicle 10 (S101). According to an embodiment, operation S101 may be performed by the data acquisition unit 110.

In operation S102, the data management device 100 may store the battery data D1, D2, ..., and Dn in the plurality of partitions P1, P2, P3, ..., and Pn, respectively, based on the generation time, which is the time when the battery data is generated in the vehicle 10, in the storage 120 including the plurality of partitions P1, P2, P3, ..., and Pn (S102). According to an embodiment, operations S101 to S104 may be performed by the controller 130.

According to an embodiment, the controller 130 may store one of the battery data excluding the shade battery data D11_SH in each of the plurality of partitions P1, P2, P3, ..., and Pn. A portion of the storage 120 including the plurality of partitions P1, P2, P3, ..., and Pn may be the long-term storage S2.

In operation S103, the data management device 100 may generate the battery data D11 corresponding to the generation time of the shade battery data D11_SH among the pieces of battery data stored in the storage 120 and the temporary battery data D11' including the shade battery data (S103).

In operation S104, the data management device 100 may divide the temporary battery data D11' and re-store the divided temporary battery data in the partition P1 corresponding to the generation time among the plurality of partitions (S104).

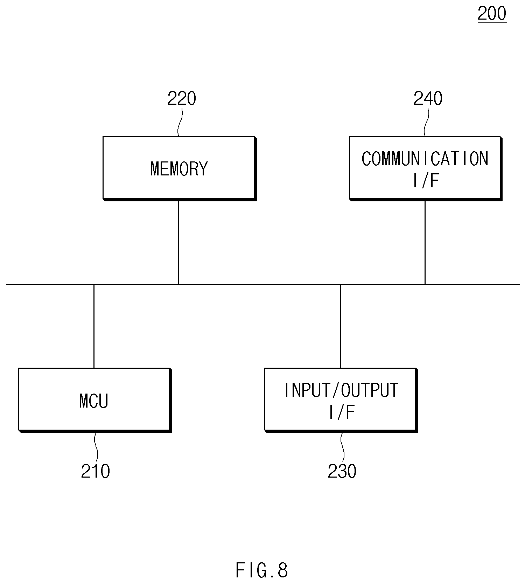

FIG. 8 is a block diagram showing a hardware configuration of a computing system for performing a method of operating a data management device according to one embodiment disclosed herein.

Referring to FIG. 8, a computing system 200 according to one embodiment disclosed herein may include a micro controller unit (MCU) 210, a memory 220, an input/output I/F 230, and a communication I/F 240.

The MCU 210 may be a processor for executing various programs (e.g., a battery data collection program, a data analysis program, and a data processing program) stored in the memory 220, processing various pieces of information including battery data through these programs, and performing functions of the data management device 100 shown in FIGS. 1 to 7.

The memory 220 may store various programs such as a battery data collection program, a data analysis program, and a data processing program.

A plurality of memories 220 may be provided as needed. The memory 220 may be a volatile memory or a non-volatile memory. As the memory 220 of the volatile memory, a RAM, a DRAM, a SRAM, etc. can be used. As the memory 220 of the non-volatile memory, a ROM, a PROM, an EAROM, an EPROM, an EEPROM, a flash memory, etc. can be used. Examples of the above-listed memories 220 are merely illustrative and are not limited to these examples.

The input/output I/F 230 may be an interface for connecting an input device (not shown), such as a keyboard, a mouse, or a touch panel, and an output device, such as a display (not shown) with the MCU 210 and allowing the input and output devices and the MCU 4610 to transmit and receive data.

The communication I/F 240 is a component capable of transmitting and receiving various data to and from the server and may be various devices capable of supporting wired or wireless communication. For example, the data management device 100 may transmit and receive various pieces of information including battery data, etc. from a separately provided external server through the communication I/F 240.

As described above, the computer program according to one embodiment disclosed herein may be implemented as a module for performing the functions shown in FIG. 2, for example, by being recorded in the memory 220 and processed by the MCU 210.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above-described disclosure schematically describes the features of several embodiments so that those skilled in the art may better understand the aspects of the present disclosure. Those skilled in the art will readily appreciate that the present disclosure may be used as a basis for designing or modifying other structures to perform the same purpose or achieve the same advantage of the embodiments introduced herein. Furthermore, those skilled in the art will recognize that such equivalent configurations do not depart from the scope of the present disclosure, and various changes, substitutions, and modifications can be made herein without departing from the scope of the present disclosure.

### [DESCRIPTION OF REFERENCE NUMERALS]

1: data management system
10: vehicle
20: battery management device
100: data management device
110: data acquisition unit
120: storage
130: controller
200: computing system
210: MCU
220: memory
230: input/output I/F
240: communication I/F

## Claims

1. A data management device comprising:
a data acquisition unit configured to acquire battery data including shade battery data from a vehicle;
a storage including a plurality of partitions and storing the battery data; and
a controller is configured to:
store the battery data in each of the plurality of partitions based on a generation time that is the time when the battery data is generated from the vehicle;
generate battery data corresponding to the generation time of the shade battery data among the pieces of battery data stored in the storage and temporary battery data including the shade battery data; and
divide the temporary battery data and re-store the divided temporary battery data in a partition corresponding to the generation time among the plurality of partitions.

2. The data management device of claim 1, wherein the shade battery data is battery data that is generated at the same generation time as the battery data stored in the storage and acquired by the data acquisition unit after the stored battery data is stored in the storage.

3. The data management device of claim 1, wherein the controller divides the battery data into the same size and stores the divided battery data in each of the plurality of partitions.

4. The data management device of claim 3, wherein the controller divides the battery data based on the number of computing nodes of the data management device.

5. The data management device of claim 1, wherein the controller is configured to:
store the temporary battery data in a buffer; and
delete the battery data corresponding to the generation time of the shade battery data stored in the storage before storing the temporary battery data in the storage.

6. The data management device of claim 1, wherein the controller divides the temporary battery data into the same size and re-stores the divided temporary battery data in the partition corresponding to the generation time.

7. The data management device of claim 6, wherein the controller divides the temporary battery data based on the number of computing nodes of the data management device.

8. The data management device of claim 1, wherein the controller divides the temporary battery data in time series order.

9. A data management method comprising:
acquiring battery data including shade battery data from a vehicle;
storing the battery data in each of a plurality of partitions in a storage including the plurality of partitions based on a generation time that is the time when the battery data is generated from the vehicle;
generating battery data corresponding to the generation time of the shade battery data among the pieces of battery data stored in the storage and temporary battery data including the shade battery data; and
dividing the temporary battery data and re-storing the divided temporary battery data in a partition corresponding to the generation time among the plurality of partitions.

10. The data management method of claim 9, wherein the shade battery data is battery data that is generated at the same generation time as the battery data stored in the storage and acquired after the stored battery data is stored in the storage.

11. The data management method of claim 9, wherein the storing of the battery data in each of the plurality of partitions includes dividing the battery data into the same size and storing the divided battery data in each of the plurality of partitions.

12. The data management method of claim 11, comprising dividing the battery data based on the number of computing nodes of the data management method.

13. The data management method of claim 9, further comprising:
storing the temporary battery data in a buffer; and
deleting the battery data corresponding to the generation time of the shade battery data stored in the storage before storing the temporary battery data in the storage.

14. The data management method of claim 9, wherein the re-storing of the temporary battery data includes dividing the temporary battery data into the same size and re-storing the divided temporary battery data in the partition corresponding to the generation time.

15. The data management method of claim 14, comprising dividing the temporary battery data based on the number of computing nodes of the data management method.

16. The data management method of claim 9, wherein the re-storing of the temporary battery data includes dividing the temporary battery data in time series order.
